# EUROPÄISCHE PATENTANMELDUNG

(11) **EP 1 195 967 A2**
(43) Veröffentlichungstag der Anmeldung: **10.04.2002**
(21) Anmeldenummer: 01250345.4
(22) Anmeldetag: 04.10.2001
(51) Int. Cl.: H04L 29/06, H04Q 7/32, G06F 17/30

(54) **Kontextabhängiges Portal für mobile Endgeräte**

(30) Priorität: 05.10.2000 DE 10050834
(71) Anmelder: Lesswire AG, 15236 Frankfurt (DE)
(72) Erfinder: Kissinger, Wolfgang, 15326 Lebus (DE)
(74) Vertreter: Eisenführ, Speiser & Partner

(57) **Zusammenfassung**

Informationsserver zum Bereitstellen von Informationen, die zur Personalisierung einer Informationsdarstellung benötigt werden, insbesondere für mobile Informationsvorrichtungen in einer drahtlosen Kommunikationsumgebung, mit einer Daten und Informationen enthaltenden Datenbank (13), einem Zeitbestimmungsmittel (12) zum Abgeben von Zeit- und/oder Datumsinformationen, einem Profilspeicher (10) zum Speichern von anwenderspezifischen Profilinformationen, einem Verknüpfungsmittel (2) zum Verknüpfen der Zeit- und/oder Datums-Informationen mit den Profil-Informationen zu Auswahl-Informationen, einem Verarbeitungsmittel (1) zum Extrahieren von Datenbank-Informationen aus der Datenbank (13) entsprechend der durch das Verknüpfungsmittel (2) bestimmten Auswahl-Informationen, und einem Übertragungsmittel (4) zum Durchführen einer Übertragung der extrahierten Datenbank-Informationen zu der mobilen Informationsvorrichtung.

## Beschreibung

Die vorliegende Erfindung betrifft einen Informationsserver zum Bereitstellen von Informationen, die zur Personalisierung einer Informationsdarstellung benötigt werden, insbesondere für mobile Informationsvorrichtungen in einer drahtlosen Kommunikationsumgebung, eine mobile Informationsvorrichtung in einer drahtlosen Kommunikationsumgebung.

Die vorliegende Erfindung betrifft ferner ein Verfahren zum Anpassen einer Informationsdarstellung in einer sich in einer drahtlosen Kommunikationsumgebung befindlichen mobilen Informationsvorrichtung an anwenderspezifische Bedürfnisse sowie ein System zur Durchführung eines Verfahrens zum Anpassen einer Informationsdarstellung in einer sich in einer drahtlosen Kommunikationsumgebung befindlichen mobilen Informationsvorrichtung an anwenderspezifische Bedürfnisse.

Die Erfindung betrifft außerdem ein System mit einem Informationsserver zum Bereitstellen von Informationen, die zur Personalisierung einer Informationsdarstellung benötigt werden und einer mobilen Informationsvorrichtung in einer drahtlosen Kommunikationsumgebung.

Bei mobilen Anwendungen, wie beispielsweise Mobiltelefonen, ist die Darstellung und die Gestaltung eines Displays von großer Bedeutung, da Ein- und Ausgaben schwieriger zu bewerkstelligen sind als bei beispielsweise einem stationären Computer mit einem herkömmlichen Monitor. Die Übersichtlichkeit der Startseiten-der sogenannten Portale - kommt gerade bei mobilen Anwendungen eine wesentliche Bedeutung zu. Die Startseite der mobilen Informationsvorrichtung, das Portal, enthält dabei Informationen und Zugriffsadressen für weitere Inhalte. Mit mobilen Informationsvorrichtungen, wie beispielsweise Mobiltelefone mit WAP- oder HTML-Browsern in zellularen Netzen, ist der Zugriff auf Inhalte des Internets sowie auf Inhalte von örtlich beschränkten Netzwerken möglich.

Die allgemeinen Umstände der mobilen Nutzung, die Beschränkung des Displays der mobilen Informationsvorrichtung hinsichtlich ihrer Größe, Auflösung und Farbgebung sowie die wenig komfortable Dateneingabe machen die Anpassung der Startseite an die aktuellen Bedürfnisse des Anwenders noch wichtiger als bei stationären Internetanwendungen oder dergleichen. Ein wesentlicher Punkt bei der Nutzung von angebotenen Diensten wird im wesentlichen dadurch bestimmt, ob es gelingt, mit geringem Aufwand die jeweils gewünschten Informationen zu erhalten.

Aus dem Stand der Technik ist es ferner bekannt, Daten zum Aufenthaltsort von Personen in einem speziellen Register, dem sogenannten Home-Location-Register oder einem Visitor-Location-Register, zu speichern. Mit anderen Worten, es wird die gegenwärtige Zuordnung des Anwenders zu einer Mobilfunkzelle gespeichert.

Aus dem Stand der Technik sind Möglichkeiten einer Personalisierung der Startseite von mobilen sowie von stationären Informationsvorrichtungen über das Internet sowie über örtlich begrenzte Informationsnetzwerke durch Auswahl von Inhalten sowie der Gestaltung des jeweiligen Displays bekannt. Der Anwender kann vorab auswählen, welche Inhalte in der ebenfalls von ihm auswählbaren Gestaltung angezeigt werden.

Ferner ist die Möglichkeit vorhanden, von verschiedenen Anbietern zusammengestellte Startseiten zu nutzen. Damit geht eine weitgehende Anpassung der Startseiten bzw. der Portale an die Interessen und Bedürfnisse des Anwenders einher. Ferner wird der Aufenthaltsort des Nutzers dahingehend verwendet, um konkrete Informationen, wie beispielsweise das nächste Restaurant, zu erhalten.

Aufgrund der immer größer werdenden Informationsflut ist jedoch eine weitere Anpassung und Personalisierung der Startseite insbesondere von mobilen Informationsvorrichtungen wünschenswert.

Es ist daher Aufgabe der Erfindung, einen Informationsserver vorzusehen, der eine verbesserte Anpassung der Gestaltung sowie der darzustellenden Informationen ermöglicht.

Des weiteren ist es eine Aufgabe der vorliegenden Erfindung, eine mobile Informationsvorrichtung vorzusehen, die eine verbesserte Anpassung der Gestaltung sowie der darzustellenden Informationen ermöglicht.

Ferner ist es eine Aufgabe der Erfindung, ein Verfahren vorzusehen, welches eine verbesserte Anpassung einer Informationsdarstellung an anwenderspezifische Bedürfnisse in einer mobilen Informationsvorrichtung vorsieht.

Die Aufgaben der Erfindung wird durch einen in Anspruch 1 definierten Informationsserver, durch eine in Anspruch 10 definierte mobile Informationsvorrichtung, durch ein in Anspruch 13 definiertes Verfahren, durch ein in Anspruch 18 definiertes System sowie durch ein in Anspruch 19 definiertes System gelöst.

Der Erfindung liegt dabei der Gedanke zugrunde, einen Informationsserver vorzusehen, der Informationen für eine mobile Informationsvorrichtung in einer drahtlosen Kommunikationsumgebung bereitstellt, welche zur Anpassung einer Informationsdarstellung in der mobilen Informationsvorrichtung an anwenderbezogene Interessen und Bedürfnisse verwendet werden können. Ein derartiger Informationsserver weist eine Datenbank auf, in der sowohl Daten als auch Informationen enthalten sind. Ein Zeitbestimmungsmittel dient der Abgabe von Zeit- und/oder Datumsinformationen. Ein Profilspeicher dient der Speicherung von Informationen hinsichtlich eines Anwenderprofils. Die Zeit- und/oder Datumsinformationen werden mit den Profil-Informationen in einem Verknüpfungsmittel zu Auswahl-Informationen verknüpft. In einem Verarbeitungsmittel werden Datenbank-Informationen aus der Datenbank entsprechend den Auswahl-Informationen extrahiert. Schließlich weist der Informationsserver ein Übertragungsmittel auf, welches zum Durchführen einer Übertragung der extrahierten Datenbank-Informationen zu der mobilen Informationsvorrichtung dient.

Die mit der Erfindung einhergehenden Vorteile bestehen insbesondere darin, dass ein derartiger Informationsserver eine Verknüpfung der anwender-spezifischen Profil-Informationen mit Zeit- und/oder Datums-Informationen ermöglicht. Eine Anpassung der Informationsgestaltung des Displays ist nicht mehr nur von vorab eingegebenen Profil-Informationen abhängig, sondern kann vielmehr ebenfalls beispielsweise von der Uhrzeit sowie dem Wochentag abhängig sein. Dies führt zu einer wesentlichen Verbesserung der Anpassungsmöglichkeiten und Verknüpfungsmöglichkeit der an die mobile Informationsvorrichtung zu übertragenden Informationen. Es ist nunmehr beispielsweise möglich, eine Anpassung der Informationsdarstellung für die übliche Bürozeit, eine weitere Anpassung für die Abendstunden sowie eine Anpassung für das Wochenende bereitzustellen.

In einer weiteren Ausgestaltung der Erfindung enthalten die Datenbank-Informationen sowohl Gestaltungs-Informationen zur Gestaltung des Displays der mobilen Informationsvorrichtung als auch auf dem Display darzustellende Informationen, die entsprechend der Gestaltung des Displays angezeigt werden sollen. Somit ist nicht nur eine Anpassung der darzustellenden Informationen, sondern auch eine Anpassung der Gestaltung des Displays in Abhängigkeit der Auswahl-Informationen möglich.

Bei einer bevorzugten Ausgestaltung der Erfindung weist der Informationsserver ferner ein Positionsbestimmungsmittel auf, welches zum Bestimmen der Position der mobilen Informationsvorrichtung und zum Abgeben dieser Positions-Informationen dient. Dabei verknüpft das Verknüpfungsmittel die Positions-Informationen mit den Zeit-und/oder Datums-Informationen und den Profil-Informationen zu Auswahl-Informationen. Die Einbeziehung der Positions-Informationen in die Auswahl-Informationen führt zu einer weiteren Verbesserung der Anpassungsmöglichkeit der Informationsdarstellung auf dem Display der mobilen Informationsvorrichtung, da nunmehr auch die Position der mobilen Informationsvorrichtung bei den Auswahl-Informationen berücksichtigt wird. Wenn ein Anwender sich beispielsweise in einer bestimmten Stadt aufhält, wird er höchstwahrscheinlich Informationen zu dieser Stadt benötigen, so dass Informationen zu anderen Städten ausgeblendet werden können.

Bei einer weiteren Ausgestaltung der Erfindung weist der Informationsserver ferner ein Portalanpassungmittel auf, welches zum Anpassen von Portal-Informationen dient, wobei die Portal-Informationen in den Gestaltungs-Informationen enthalten sind. Mit Hilfe des Portalanpassungsmittels wird die Gestaltung des Portals bereits in dem Informationsserver aufbereitet und an die relevanten Informationen angepasst.

Bei einer besonders bevorzugten Ausgestaltung der Erfindung weist das Übertragungsmittel eine Sende-/Empfangs-Einheit auf, die dem drahtlosen Kommunizieren mit der mobilen Informationsvorrichtung dient. Alternativ dazu kann das Übertragungsmittel über ein Netzwerk mit einer externen Basisstation kommunizieren, in deren Sende-Reichweite sich die mobile Informationsvorrichtung befindet, wobei die Basisstation drahtlos mit der mobilen Informationsvorrichtung kommuniziert. Somit ist es möglich, den Informationsserver sowohl einzeln in einem Inselbetrieb oder in einem Netzwerkverbund zu betreiben, wobei die Endstrecke zu der mobilen Informationsvorrichtung immer drahtlos überbrückt wird.

Eine weitere besonders bevorzugte Ausgestaltung der Erfindung sieht ferner einen Handlungsspeicher in dem Informationsserver vor, der zum Speichern der positionsabhängigen und zeitabhängigen Handlungs-Informationen der mobilen Informationsvorrichtung dient. Dabei werden diese Handlungs-Informationen ebenfalls in die Auswahl-Informationen eingebracht. Dies hat insbesondere den Vorteil, dass die in der Vergangenheit relevanten Informationen ebenfalls für eine verbesserte Anpassung der Darstellung verwendet werden können.

Bei einer weiteren Ausgestaltung der Erfindung weist der Informationsserver ferner eine Benutzerschnittstelle als Eingabe-/Ausgabe-Schnittstelle, ein Eingabemittel und ein Ausgabemittel auf. Die in dem Profilspeicher gespeicherten Profil-Informationen können so beispielsweise mittels dem Eingabemittel eingegeben werden.

Bei einer weiteren bevorzugten Ausgestaltung der Erfindung weist das Anwenderprofilverschiedene positionsabhängige, zeitabhängige und/oder personenbezogene Elemente auf. Mit anderen Worten lassen sich beispielsweise für eine bestimmte Position oder für eine bestimmte Uhrzeit oder für eine Kombination daraus ein bestimmtes Anwenderprofil bilden.

Der Erfindung liegt ferner der Gedanke zugrunde, eine mobile Informationsvorrichtung in einer drahtlosen Kommunikationsumgebung vorzusehen, welche mittels einer Sende-/Empfangs-Einheit mit mindestens einer Basisstation der drahtlosen Kommunikationsumgebung kommuniziert, die sich in Sende-Reichweite befinden. Ein Verarbeitungsmittel der mobilen Informationsvorrichtung verarbeitet die empfangenen Informationen, welche sowohl Gestaltungs-Informationen zur Gestaltung des Displays sowie darzustellende Informationen enthalten, wobei die darzustellenden Informationen von den Gestaltungsinformationen getrennt werden.

Die mobile Informationsvorrichtung weist ferner ein Informationsgestaltungsmittel auf, welches die Gestaltungs-Informationen zur Gestaltung des Displays sowie die darzustellenden Informationen, welche entsprechend der Gestaltung des Displays angezeigt werden sollen, zum Anpassen der Informationsgestaltung an die empfangenen Gestaltungsinformationen verwendet. Ferner ist ein Anzeigemittel zum Anzeigen der darzustellenden Informationen entsprechend den Gestaltungs-Informationen zur Gestaltung des Displays der mobilen Informationsvorrichtung vorgesehen. Dabei enthalten die Gestaltungs-Informationen zumindest anwender-spezifische und zeitabhängige Informationen.

Die Einbeziehung von anwenderspezifischen Informationen und von zeitabhängigen Informationen führt hierbei zu einer wesentlichen Verbesserung der Anpassungsfähigkeit der Informationsdarstellung einer mobilen Informationsvorrichtung.

Bei einer bevorzugten Ausgestaltung der Erfindung enthalten die darzustellenden Informationen und die Gestaltungsinformationen Positionsinformationen, welche die Position der mobilen Informationsvorrichtung kennzeichnen. Dies führt ebenfalls zu einer wesentlichen Verbesserung der Anpassungsfähigkeit der Darstellung der mobilen Informationsvorrichtung.

Weitere Ausgestaltungen der Erfindung sind Gegenstand der Unteransprüche.

Die Erfindung wird nachstehend unter Bezugnahme auf die Zeichnung detailliert beschrieben.

Es zeigen dabei:
- Figur 1: ein Blockschaltbild eines Informationsservers, und
- Figur 2: ein Blockschaltbild einer mobilen Informationsvorrichtung.

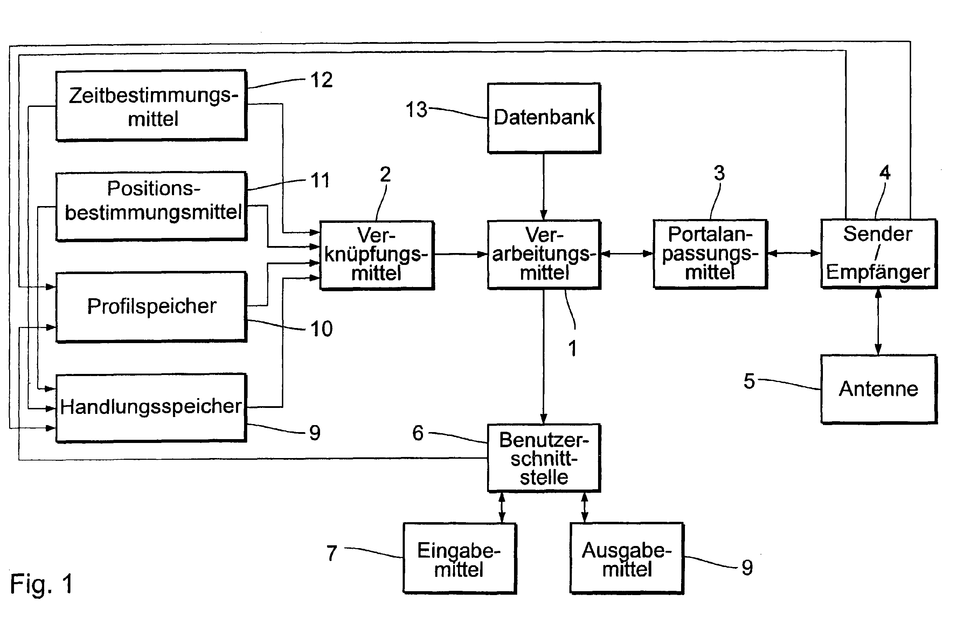

Figur 1 zeigt ein Blockschaltbild eines Informationsservers. Der Informationsserver weist ein Verarbeitungsmittel 1 auf, welches mit einer Datenbank 13, einem Portalanpassungsmittel 3, einem Verknüpfungsmittel 2 und einer Benutzerschnittstelle 6 verbunden ist. Die Benutzerschnittstelle 6 ist ferner mit einem Eingabemittel 7 und einem Ausgabemittel 8 verbunden. Das Verknüpfungsmittel 2 ist des weiteren mit einem Zeitbestimmungsmittel 12, einem Positionsbestimmungsmittel 11, einem Profilspeicher 10 und einem Handlungsspeicher 9 verbunden. Der Handlungsspeicher 9 ist ferner mit dem Positionsbestimmungsmittel 1 und dem Zeitbestimmungsmittel 12 verbunden. Der Profilspeicher 10 ist außerdem mit der Benutzerschnittstelle 6 verbunden. Das Portalanpassungsmittel 3 ist mit dem Sender/Empfänger 4 verbunden, wobei der Sender/Empfänger 4 mit dem Profilspeicher 10 und dem Handlungsspeicher 9 verbunden ist. Schließlich ist der Sender/Empfänger außerdem noch mit einer Antenne 5 verbunden.

Anwenderspezifischen Profil-Informationen können in dem Profilspeicher 10 gespeichert werden. Diese Informationen können entweder mittels dem Eingabemittel 7 über die Benutzerschnittstelle 6 in den Profilspeicher 10 geschrieben werden oder sie können mittels des Senders/Empfängers 4 eingegeben werden.

Das Zeitbestimmungsmittel 12 bestimmt das Datum und die Uhrzeit in regelmäßigen Abständen. Ebenso verfährt das Positionsbestimmungsmittel, welches die Position der mobilen Informationsvorrichtung in vorbestimmten Abschnitten erfasst und bei Bedarf ausgibt. In dem Handlungsspeicher 9 werden die Zeit- und Datums-Informationen sowie die Positions-Informationen in Abhängigkeit der Zeit erfasst, um diese Informationen bei Bedarf auswerten zu können.

Die Informationen von dem Zeitbestimmungsmittel 12, dem Positionsbestimmungsmittel 11, dem Profilspeicher 10 und dem Handlungsspeicher 9 werden in dem Verknüpfungsmittel 2 verknüpft, um Auswahl-Informationen zu erhalten. Diese Auswahl-Informationen stellen somit eine Verknüpfung des aktuellen Aufenthaltortes des Nutzers, des Kalendertages, der Uhrzeit, des anwenderspezifischen Profils und der bisherigen Aufenthaltsorten und genutzten Informationen dar. Diese Auswahl-Informationen werden an das Verarbeitungsmittel 1 weitergeleitet, wo Informationen aus der Datenbank 13 anhand der Auswahl-Informationen extrahiert werden. Diese extrahierten Informationen bilden sozusagen eine Schnittmenge aus allen vorhandenen Informationen. Diese Schnittmenge beinhaltet somit alle derzeitigen für den spezifischen Anwender relevanten Informationen.

Diese relevanten Informationen werden dann an das Portalanpassungsmittel 3 weitergeleitet. Dort werden diese Informationen aufbereitet, damit sie auf dem Display einer mobilen Informationsvorrichtung in der vorgegebenen Gestaltung angezeigt werden können. Die Gestaltung des Displays der mobilen Informationsvorrichtung kann dabei von der Uhrzeit, dem Datum, der Position und dem persönlichen Profil des Anwenders abhängen.

Nachdem die relevanten Informationen aufbereitet wurden, damit sie auf dem Display der mobilen Informationsvorrichtung dargestellt werden können, werden sie mittels des Senders/Empfängers 4 und einer Antenne 5 an die mobile Informationsvorrichtung übermittelt.

Alternativ dazu ist es auch möglich, dass der Informationsserver über ein Netzwerk wie beispielsweise das Internet mit einer Basisstation verbunden ist und mit dieser kommuniziert und somit die entsprechenden Informationen an die Basisstation übermittelt. Von der Basisstation aus erfolgt die Kommunikation mit der mobilen Informationsvorrichtung drahtlos.

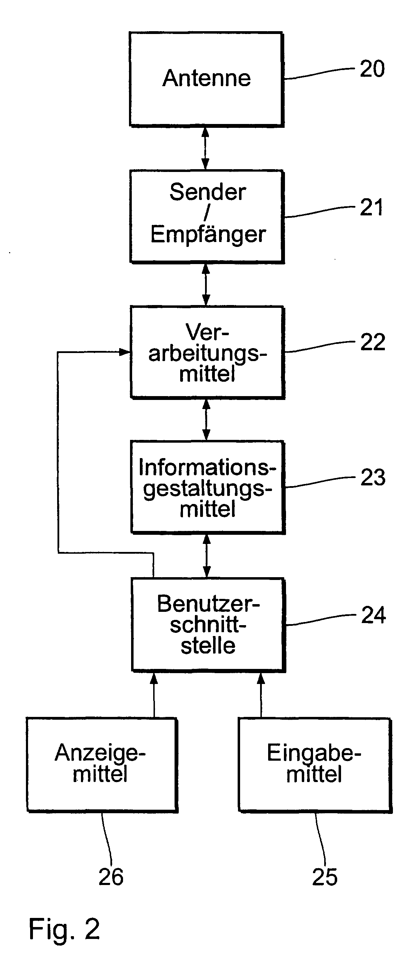

In Figur 2 ist ein Blockschaltbild einer mobilen Informationsvorrichtung gezeigt. Die mobile Informationsvorrichtung weist eine Antenne 20 auf, die mit einem Sender/ Empfänger 21 verbunden ist. Ein Verarbeitungsmittel 22 ist mit dem Sender/Empfänger 21, dem Informationsgestaltungsmittel 23 und einer Benutzerschnittstelle 24 verbunden. Das Informationsgestaltungsmittel 23 ist ebenfalls mit der Benutzerschnittstelle 24 verbunden. An der Benutzerschnittstelle 24 sind ferner ein Anzeigemittel 26 und ein Eingabemittel 25 angeschlossen.

Das von dem Informationsserver über die Sende-/Empfangseinheit 4 des Informationsservers oder mittels einer Basisstation übermittelte Signal wird von der Antenne 20 und der Sender-/Empfänger-Einheit 21 der mobilen Informationsvorrichtung empfangen und an das Verarbeitungsmittel 22 weitergeleitet. In dem Verarbeitungsmittel 22 wird das empfangene Signal analysiert und die darzustellenden Informationen sowie die Gestaltungs-Informationen werden jeweils aus dem empfangenen Signal extrahiert. Die in dem Portalanpassungsmittel 3 des Informationsservers aufbereiteten Informationen, d.h. die Gestaltungs-Informationen sowie die darzustellenden Informationen, werden zum Anpassen der Informationsgestaltung an die empfangenen Gestaltungs-Informationen verwendet.

Der Server kann die entsprechenden relevanten Informationen entweder kontinuierlich oder in vorbestimmten Zeitabständen senden.

Die entsprechend der empfangenen Gestaltungs-Informationen angepassten Daten und Informationen werden über die Benutzerschnittstelle 24 an das Anzeigemittel 26 weitergeleitet. Das Anzeigemittel 26 stellt das Display der mobilen Informationsvorrichtung dar. Die empfangenen Informationen werden entsprechend den Gestaltungs-Informationen zur Gestaltung des Displays auf dem Display dargestellt.

Die empfangenen Gestaltungs-Informationen und die darzustellenden Informationen enthalten dabei anwenderspezifische Profil-Informationen, uhrzeitabhängige, datumsabhängige und positionsabhängige Informationen.

Der Informationsserver und die mobile Informationsvorrichtung lassen sich natürlich auch zu einem System verbinden. Es ist ebenfalls denkbar, dass nicht nur ein Informationsserver, sondern eine Vielzahl von Informationsserver in einem vorherbestimmten Gebiet vorhanden sind. Ebenso ist es möglich, dass mehrere mobile Informationssvorrichtungen in diesem Gebiet vorhanden sind. Dabei können die Informationsserver miteinander über ein Netzwerk wie beispielsweise ein LAN oder das Internet verbunden sein. Die verschiedenen Informationsserver dieses Systems können dabei unterschiedliche Informationen in ihren Datenbänken aufweisen. Es ist aber auch möglich, dass die Informationen in den Datenbänken abgeglichen werden.

Das Positionsbestimmungsmittel 11 kann die Position der mobilen Informationsvorrichtung entweder durch Identifizierung der Funkzelle, wo sich der Anwender aufhält, oder durch ein Laufzeitverfahren bestimmen, was eine noch genauere Positionsbestimmung zulässt.

Alternativ dazu kann die Positionsbestimmung auch durch die mobile Informationsvorrichtung beispielsweise durch ein GPS-Modul erfolgen.

Der Anwender kann sein anwender-spezifisches Profil auch alternativ über die mobile Informationsvorrichtung mittels dem Eingabemittel 25 eingeben. Diese Informationen werden dann mittels dem Sender/Empfänger 21 und der Antenne 20 an den Informationsserver übermittelt und mittels dem Sender/Empfänger 4 des Informationsservers in dem Profilspeicher 10 gespeichert. Der Anwender hat dabei die Möglichkeit, die Gestaltung des Displays bzw. das Portal thematisch zu strukturieren.

Wenn der Anwender sich mit der mobilen Informationsvorrichtung bewegt und somit seine Position verändert oder wenn ein Anwender für eine längere Zeit an einem festen Ort bleibt, werden die darzustellenden Informationen sowie die Gestaltungs-Informationen entsprechend der neuen Position oder entsprechend der neuen Uhrzeit gegebenenfalls aktualisiert. Diese Aktualisierung erfolgt in vorbestimmten Zeitabständen, welche der Anwender selbst einstellen kann.

Der Anwender kann ebenfalls mehrere Profile, wie beispielsweise ein Profil während der üblichen Bürozeiten, ein Freizeitprofil, ein Wochenendprofil, Profile für bestimmte Städte oder Orte wie beispielsweise ein Flughafen oder ein Bahnhof usw. eingeben. Diese Bereiche bzw. Umgebungen lassen sich beispielsweise als eine Landkarte auf dem Display darstellen. Die entsprechenden Informationen sind aus den Datenbänken der Informationsserver abrufbar. Durch die Eingabe dieser Profile ist es dem Anwender möglich, das vorhandene Informationsangebot auf die für ihn relevanten Informationen zu reduzieren. Entsprechend der Profile kann der Anwender die Gestaltung der Portal variieren und abstimmen. Dies kann nicht nur ortsabhängig bzw. positionsabhängig sondern auch uhrzeitabhängig oder datumsabhängig erfolgen.

Es ist ebenfalls denkbar, dass das Profil des Anwenders durch einen Systemanbieter ergänzt wird. Anhand der in dem Handlungsspeicher gespeicherten Daten kann ein Systemanbieter ermitteln, welche Informationen für den Anwender von Interesse sein könnten. Diese von dem Systemanbieter ermittelten Informationen können dem Anwender als Bonusinformationen angeboten werden.

## Patentansprüche

1. Informationsserver zum Bereitstellen von Informationen, die zur Personalisierung einer Informationsdarstellung benötigt werden, insbesondere für mobile Informationsvorrichtungen in einer drahtlosen Kommunikationsumgebung, mit
- einer Daten und Informationen enthaltenden Datenbank (13),
- einem Zeitbestimmungsmittel (12) zum Abgeben von Zeit- und/oder Datumsinformationen,
- einem Profilspeicher (10) zum Speichern von anwender-spezifischen Profilinformationen,
- einem Verknüpfungsmittel (2) zum Verknüpfen der Zeit- und/oder Datums-Informationen mit den Profil-Informationen zu Auswahl-Informationen,
- einem Verarbeitungsmittel (1) zum Extrahieren von Datenbank-Informationen aus der Datenbank (13) entsprechend der durch das Verknüpfungsmittel (2) bestimmten Auswahl-Informationen, und
- einem Übertragungsmittel (4) zum Durchführen einer Übertragung der extrahierten Datenbank-Informationen zu der mobilen Informationsvorrichtung.

2. Informationsserver nach Anspruch 1, wobei die Datenbankinformationen Gestaltungs-Informationen zur Gestaltung des Displays der mobilen Informationsvorrichtung sowie darzustellende Informationen enthalten, die entsprechend der Gestaltung des Displays angezeigt werden sollen.

3. Informationsserver nach Anspruch 1 oder 2, ferner mit einem Positionsbestimmungsmittel (11) zum Bestimmen der Position der mobilen Informationsvorrichtung und zum Abgeben dieser Positionsinformationen, wobei das Verknüpfungsmittel (2) die Positionsinformationen mit den Zeit- und/oder Datums-Informationen und den Profil-Informationen zu Auswahl-Informationen verknüpft.

4. Informationsserver nach einem der vorherigen Ansprüche, ferner mit einem Portalanpassungsmittel (3) zum Anpassen von Portal-Informationen, die in den Gestaltungs-Informationen enthalten sind.

5. Informationsserver nach einem der vorherigen Ansprüche, wobei das Übertragungsmittel (4) eine Sende-/Empfangs-Einheit (4) zum drahtlosen Kommunizieren mit der mobilen Informationsvorrichtung aufweist.

6. Informationsserver nach einem der Ansprüche 1 bis 4, wobei das Übertragungsmittel (4) mittels eines Netzwerks mit einer externen Basisstation kommuniziert, in deren Sende-Reichweite sich die mobile Informationsvorrichtung befindet, wobei die Basisstation drahtlos mit der mobilen Informationsvorrichtung kommuniziert.

7. Informationsserver nach einem der vorherigen Ansprüche, ferner mit einem Handlungsspeicher zum Speichern der ortsabhängigen und zeitabhängigen Handlungs-Informationen der mobilen Informationsvorrichtung, wobei das Verknüpfungsmittel (2) diese Handlungs-Informationen ebenfalls mit den Positions-Informationen, den Profil-Informationen sowie den Zeit- und/oder Datums-Informationen verknüpft, um Auswahl-Informationen zu bilden.

8. Informationsserver nach einem der vorherigen Ansprüche, ferner mit
- einer Benutzerschnittstelle (6) als eine Eingabe/Ausgabe-Schnittstelle,
- einem Eingabemittel (7) zum Eingeben von Informationen, und
- einem Ausgabemittel (8) zum Ausgeben von Informationen,
wobei das in dem Profilspeicher (10) gespeicherte Profil-Informationen mittels dem Eingabemittel (7) des Servers und/oder mittels der mobilen Informationsvorrichtung eingegeben wird.

9. Informationsserver nach einem der vorherigen Ansprüche, wobei das Anwenderprofil verschiedene ortsabhängige, zeitabhängige und/oder personenbezogene Elemente enthält.

10. Mobile Informationsvorrichtung in einer drahtlosen Kommunikationsumgebung, mit
- einer Sende-/Empfangs-Einheit (21) zum drahtlosen Kommunizieren mit sich in Sende-Reichweite befindlichen mindestens einer Basisstationen der drahtlosen Kommunikationsumgebung,
- einem Verarbeitungsmittel (22) zum Verarbeiten der empfangenen Informationen, welche darzustellende Informationen und Gestaltungs-Informationen enthalten, wobei die darzustellende Informationen von Gestaltungs-Informationen getrennt werden,
- einem Informationsgestaltungsmittel (23), welches die Gestaltungs-Informationen zur Gestaltung des Displays der mobilen Informationsvorrichtung sowie die darzustellenden Informationen, die entsprechend der Gestaltung des Displays angezeigt werden sollen, zum Anpassen der Informationsgestaltung an die empfangenen Gestaltungs-Informationen verwendet, und
- einem Anzeigemittel (26) zum Anzeigen der darzustellenden Informationen entsprechend den Gestaltungs-Informationen zur Gestaltung des Displays der mobilen Informationsvorrichtung,
wobei die Gestaltungs-Informationen zumindest anwender-spezifische und zeitabhängige Informationen enthalten.

11. Informationsvorrichtung nach Anspruch 10, wobei die Gestaltungs-Informationen ebenfalls Positions-Informationen enthalten, welche die Position der mobilen Informationsvorrichtung kennzeichnen.

12. Informationsvorrichtung nach Anspruch 10 oder 11, ferner mit
- einer Benutzerschnittstelle (24) als Eingabe/Ausgabe-Schnittstelle, und
- einem Eingabemittel (25) zum Eingeben von Informationen.

13. Verfahren zum Anpassen einer Informationsdarstellung in einer sich in einer drahtlosen Kommunikationsumgebung befindlichen mobilen Informationsvorrichtung an anwender-spezifische Bedürfnisse, mit den Schritten
- Empfangen von Informationen von sich in Sende-Reichweite befindlichen Basisstationen,
- Verarbeiten der empfangenen Informationen anhand von vorab eingegebenen Auswahl-Informationen, wobei die Auswahlinformationen personenbezogene Informationen enthalten, und
- Anpassen der Informationsdarstellung anhand der verarbeiteten Informationen,
**dadurch gekennzeichnet, dass**
- die von den Basisstationen gesendeten Informationen auf lokalen Servern und/oder in einem Netzwerk gespeichert sind, wobei die lokalen Server und/oder das Netzwerk mit den Basisstationen verbunden sind, und
- die Auswahl-Informationen ferner ortsabhängige und/oder zeitabhängige Informationen enthalten, wobei die Auswahlinformationen eine Verknüpfung der darin enthaltenen personenbezogenen, Positions- und/oder Zeit-Informationen darstellen.

14. Verfahren nach Anspruch 13, **dadurch gekennzeichnet, dass** die Auswahl-Informationen ferner eine Zusammenstellung der bisher verwendeten Informationen enthalten.

15. Verfahren nach Anspruch 14, **dadurch gekennzeichnet, dass** die personenbezogenen Informationen ferner vorab eingegebene Profil-Informationen enthalten.

16. Verfahren nach einem der Ansprüche 13 bis 15, **dadurch gekennzeichnet, dass** das bisherige positions- und zeitabhängige Nutzungsverhalten des Anwenders in einem Handlungsspeicher gespeichert wird, wobei die Auswahl-Informationen die in dem Handlungsspeicher gespeicherten Informationen enthalten.

17. Verfahren nach Anspruch 15, **dadurch gekennzeichnet, dass** die Profil-Informationen von dem Anwender eingegeben werden.

18. System zur Durchführung eines Verfahrens nach einem der Ansprüche 13 bis 17.

19. System mit mindestens einem Informationsserver gemäß einem der Ansprüche 1 bis 9 und mindestens einer mobilen Informationsvorrichtung gemäß einem der Ansprüche 10 bis 12.
